# EUROPEAN PATENT APPLICATION

(11) **EP 2 065 289 A2**
(43) Date of publication of application: **03.06.2009**
(21) Application number: 08380252.0
(22) Date of filing: 21.08.2008
(51) Int. Cl.: B62B 9/08

(54) **A brake device for prams**

(30) Priority: 30.11.2007 ES 200702482 U
(71) Applicant: JANE S.A., 08184 Palau Solita I Plegamans (ES)
(72) Inventor: Manuel, Jane Santamaria, 08184 Palau Solita i Plegamans, Barcelona (ES)
(74) Representative: Pastells Teixido, Manuel

(57) **Abstract**

This device is actuated by one single control (1) that by means of ropes (2 and 3) and in a simultaneous manner acts on the rear wheels (4) of the pram, and is **characterised in that** said control (1) is made up by a lever (5) at its end (6) being linked to a bracket (7) in a pin-jointed connection and at an intermediary point (9) being inferiorly linked in a pin-jointed connection to an arm (10) being at its free end (11) linked to the ropes (2 and 3), these latter being inferiorly linked to the braking means (12) being operable for braking the wheels (4), said ropes being biased by respective springs (13) being provided for securing the brake-on position. The control lever (5) in its raised brake-off position is stabilised in a position beyond the vertical where it is maintained by the very pulling force of the aforementioned springs (13).

## Description

### BACKGROUND OF THE INVENTION

As is known, all prams have brakes generally acting on the rear wheels, some of those brakes having a separate control element for each wheel whereas in some cases one single control has been provided for simultaneously acting on the two brakes corresponding to either side of the pram, said action being carried out through mechanical elements or else by means of ropes.

### SUMMARY OF THE INVENTION

This invention has as its object a brake device of the type wherein with one single control one is in a position to by means of ropes simultaneously act on the two lateral wheels, said brake device having a simple make-up while at the same time being in a position to act in a very positive manner.

A characterising feature lies for such a purpose in the fact that the single control is made up by a lever being easily accessible for its manual actuation, said lever at its end being linked to a bracket in a pin-jointed connection and at an intermediary point being inferiorly linked in a pin-jointed connection to an arm being at its free end linked to the ropes, these latter being inferiorly linked to the wheel braking means and biased by respective springs being provided for securing the brake-on position.

The control lever when in its raised brake-off arrangement is stabilised in a position beyond the vertical where it is maintained by the very pulling force of the aforementioned springs, the aforementioned arm having an arcuate make-up allowing the control lever to be swung towards said brake-off position.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figs. 1 and 2 illustrate in a side elevation the assembly of the new brake device in its brake-off and brake-on positions, respectively;
Fig. 3 is a sectional elevation showing a detail of the braking means acting on the wheels; and
Fig. 4 depicts in a perspective view the assembly of this brake device in is brake-on position.

### DETAILED DESCRIPTION

According to the drawings the brake device acts on dual wheels and comprises a single control (1) that by means of sheathed ropes (2 and 3) and in a simultaneous manner acts on each of the two double wheels (4) being arranged at each side of the pram.

The control (1) is made up by an angular, hand-operated lever (5) being at its end linked in a pin-jointed connection by means of the pin (6) to a bracket (7) being securedly attached to one of the rear legs (8) of the pram.

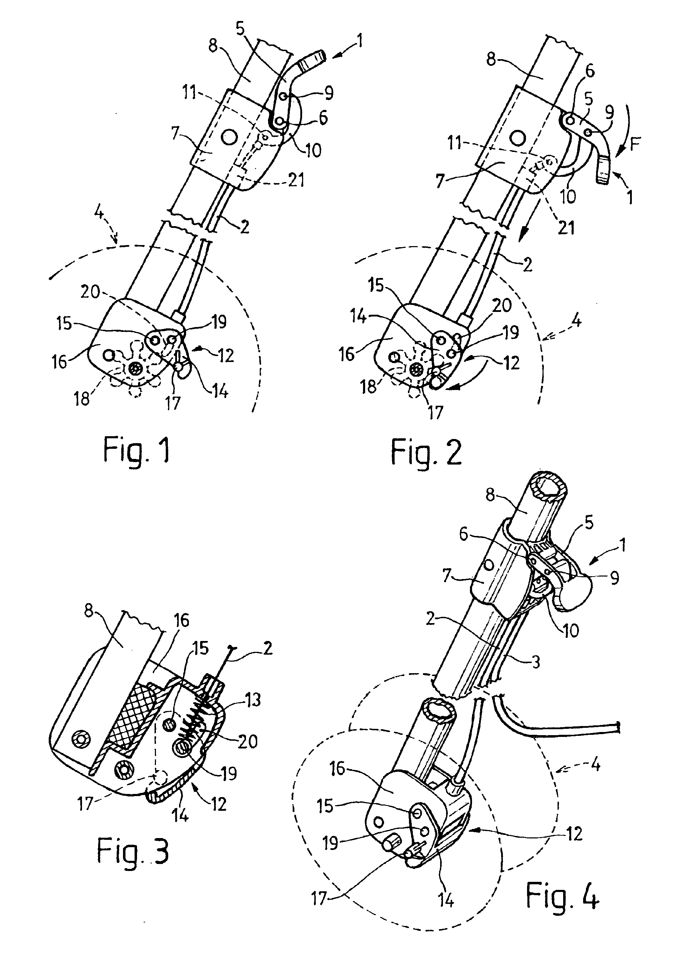

This lever (5) has two positions namely being a passive one (Fig. 1) wherein the device is in the brake-off position, and an active one (Figs. 2 and 4) wherein the device is in the brake-on position.

At an intermediary point (9) of the lever (5) an arm (10) is linked in a pin-jointed connection, said arm at its free end (11) having the sheathed ropes (2 and 3) linked to it, these latter being inferiorly linked to the wheel braking means (12) and biased by respective springs (13) being in a position to secure the brake-on position (Fig. 3).

These braking means are in this case made up by a locking lever (14) having a U-shaped cross-section and being at its sides linked in a pin-jointed connection by means of the pin (15) to the support (16) of the wheels and at each of said sides exteriorly having a respective projection (17) being such as to selectively fit into one of the recesses (18) being provided at the inner side of the wheel hub.

The ropes (2 and 3) are linked to a cross member (19) of this locking lever (14), said cross member being slidingly guided in slits (20) being provided in the sides of the wheel support (16). Numeral (21) denotes a guide being provided in bracket (7) for the passage of the ropes (2 and 3).

In order to switch from the passive brake-off position to the active brake-on position the control lever (5) is manually actuated by pushing it downwards as per arrow (F) (Fig. 2), the spring (13) being thus released and thus expanding and thereby pushing the locking lever (14) downwards by means of its action on this latter's cross member (19), said locking lever being thus swung and causing the projections (17) to fit into one of the recesses (18) of the wheel hub.

In order to obtain the brake-off position the control lever (5) will be pushed upwards by swinging it to a position beyond the vertical, said control lever being stabilised in said position by the very pulling force being exerted by the spring (13) when compressed.

## Claims

1. A brake device for prams which is actuated by one single control (1) that by means of ropes (2 and 3) and in a simultaneous manner acts on the rear wheels (4) of the pram, **characterised in that** the single control (1) is made up by a lever (5) at its end (6) being linked to a bracket (7) in a pin-jointed connection and at an intermediary point (9) being inferiorly linked in a pin-jointed connection to an arm (10) being at its free end (11) linked to the ropes (2 and 3).

2. A brake device for prams, as per claim 1, **characterised in that** the ropes (2 and 3) are inferiorly linked to the braking means (12) being operable for braking the wheels (4), said ropes being biased by respective springs (13) being provided for securing the brake-on position.

3. A brake device for prams, as per the foregoing claims, **characterised in that** the control lever (5) when in its raised brake-off position is stabilised in a position beyond the vertical where it is maintained by the very pulling force of the aforementioned springs (13).

4. A brake device for prams, as per the foregoing claims, **characterised in that** the aforementioned arm (10) has an arcuate make-up allowing the control lever (5) to be swung towards its raised brake-off position.
